# EUROPÄISCHE PATENTSCHRIFT

(11) **EP 1 526 321 B1**
(45) Veröffentlichungstag und Bekanntmachung des Hinweises auf die Patenterteilung: **28.02.2007**
(21) Anmeldenummer: 04104943.8
(22) Anmeldetag: 08.10.2004
(51) Int. Cl.: F16L 41/06

(54) **Werkzeug zum Erzeugen einer Öffnung in einer Fluidleitung**
Tool for producing a hole in a fluid line
Outil pour produire des trous dans un conduit de fluide

(30) Priorität: 20.01.2004 DE 102004003015; 20.10.2003 DE 10349214
(43) Veröffentlichungstag der Anmeldung: 27.04.2005
(73) Patentinhaber: ake Zentri-Jet Kenter GmbH, 49685 Halen (DE)
(72) Erfinder: Kenter, Alfons, 49685 Halen (DE)
(74) Vertreter: von Ahsen, Erwin-Detlef

(56) Entgegenhaltungen:
- US-A- 3 395 724
- US-A- 3 939 683
- US-B1- 6 367 362

## Beschreibung

Die Erfindung betrifft ein Werkzeug zum Erzeugen einer Öffnung in der Wandung einer Fluidleitung, insbesondere eines Metallrohres für Druckwasser, mit einer Aufnahme für die Fluidleitung, mit einem Lochstempel zum Durchdringen der Wandung, mit einem handbetätigbaren Hebel zum Antreiben des Lochstempels und mit Fixiermitteln zum Fixieren der Fluidleitung in der Aufnahme.

Die US 3,395,724 zeigt ein solches Werkzeug zum Anstechen von Leitungen, um die in einem Leitungssystem befindliche Flüssigkeit zu entfernen.

Mittels eines solchen Werkzeuges lassen sich Fluidleitungen mit einer Öffnung versehen, um hierdurch eine Abzweigung zum Anbringen einer Verzweigungsleitung oder einer Düse zu erstellen. Derartige Werkzeuge werden vornehmlich zum Erstellen von Öffnungen in Kunststoffleitungen verwendet, die für die Leitung von Wasser unter geringem Druck beispielsweise für Bewässerungsanlagen dienen. Insbesondere zum Erzeugen einer Öffnung in der Wandung eines Metallrohres, beispielsweise eines solchen für Druckwasser, sind hohe Kräfte erforderlich, um mittels eines handbetätigten Hebels eine solche Öffnung in die Wandung einzubringen. Wenn nicht gleich mit ausreichender Kraft zum Durchdringen der Wandung gearbeitet wird, ist es mit unter erforderlich, daß erneut angesetzt wird. In diesem Fall kann es vorkommen, daß die Fluidleitung in der Aufnahme verrutscht und somit benachbart der späteren Öffnung Beschädigungen der Wandungen auftreten. Dies kann zu unerwünschten Leckagen führen.

Der US 6,367,362 B1 ist ein Kurvengetriebe zu entnehmen, mit dem sich hohe Kräfte erzeugen lassen. Die US 3,939,683 beschreibt einen Bohrer mit einer gewinkelten Oberfläche.

Das der Erfindung zugrunde liegende Problem ist es, ein Werkzeug zum Erzeugen einer Öffnung in der Wandung einer Fluidleitung anzugeben, mit dem sich die Öffnung an einer vorgegebenen Stelle sicher, zuverlässig und mit geringem Kraftaufwand erzeugen läßt.

Das Problem wird erfindungsgemäß dadurch gelöst, daß bei einem Werkzeug der eingangs genannten Art der Lochstempel einen vorderen ersten Bereich mit einem ersten Winkel und einen dem ersten Bereich benachbarten zweiten Bereich mit einem kleineren zweiten Winkel aufweist.

Auf diese Weise kommt beim Ansetzen des Lochstempels an die Wandung zunächst der erste Bereich mit dem verhältnismäßig großen ersten Winkel zum Einsatz. Dieser erste Bereich bewirkt ein Eindellen und ein Einstechen der Wandung in einem verhältnismäßig kleinen Bereich. Hierbei werden relativ große Kräfte übertragen. Nachdem der erste Bereich in die Wandung eingedrungen ist, vergrößert sich die Öffnung der Wandung mehr und mehr. Damit hierbei keine unerwünscht großen Kräfte auftreten, ist der Öffnungswinkel in dem zweiten Bereich mit größerem Durchmesser verhältnismäßig klein. Dadurch bewirkt ein verhältnismäßig großes Einschieben des Lochstempels in die Öffnung nur eine verhältnismäßig geringe Änderung des Durchmessers der Öffnung. Dies ist mit verhältnismäßig geringem Kraftaufwand möglich. Die Fixiermittel bewirken dabei ein zuverlässiges Fixieren der Fluidleitung in der Aufnahme. Selbst bei einem Absetzen und erneuten Ansetzen verbleibt das Werkzeug an der einmal eingestellten Position. Auf diese Weise läßt sich einfach und zuverlässig auch dann eine Öffnung in der Wandung einer Fluidleitung an einer gewünschten Position erstellen, wenn beispielsweise die Öffnung in der Wandung eines Metallrohres für Druckwasser erzeugt werden soll, so daß hierfür große Kraftanstrengungen erforderlich sind.

Bei einer Weiterbildung der Erfindung ist die Aufnahme in einer an eine Basis klemmbaren Klemmbacke ausgebildet. Auf diese Weise kann die Fluidleitung sicher zwischen der Klemmbacke und der Basis festgeklemmt werden. Es kann außerdem ein mittels eines Griffstückes betätigbarer Gelenkhebel zum Klemmen der Klemmbacke an die Basis vorgesehen sein. Insbesondere in Verbindung mit einem Verstellmittel zum Verstellen der Fixierkraft läßt sich so ein einfaches und zuverlässiges Bedienen zum Festklemmen der Fluidleitung in der Aufnahme nach Art einer Gripzange erreichen.

Eine andere Weiterbildung der Erfindung zeichnet sich dadurch aus, daß der Lochstempel mittels eines Getriebes mit dem Hebel gekoppelt ist. Auf diese Weise läßt sich die erforderliche Kraft zum Eintreiben des Lochstempels in die Wandung der Fluidleitung reduzieren. Dadurch wird die Betätigung besonders einfach. Das Getriebe kann beispielsweise ein Kurvengetriebe sein. Eine Weiterbildung zeichnet sich dadurch aus, daß das Kurvengetriebe eine exzentrisch gelagerte Kurvenscheibe mit einer Nockenbahn aufweist, die mit einer Nocke zum Antreiben des Lochstempels zusammenwirkt. Vorzugsweise weist die Nocke eine drehbar zum Abrollen auf der Nockenbahn gelagerte Kugel oder Rolle auf. Diese Kugel oder Rolle kann aus Keramik oder gehärtetem Stahl bestehen. Dieser Aufbau ist besonders einfach und liefert gleichermaßen zuverlässig eine hohe Druckkraft zum Einpressen des Lochstempels in die Wandung der Fluidleitung, ohne daß hierzu ein besonders hoher Kraftaufwand an dem handbetätigbaren Hebel erforderlich ist.

Der Lochstempel kann außerdem verschiebbar in einem die Aufnahme aufweisenden Gehäuse angeordnet sein. Insbesondere bietet sich eine Führung für den Lochstempel an. Dadurch läßt sich ein großer Hub des Lochstempels bei gleichzeitig präziser Führung zum Erzeugen einer Öffnung hoher Qualität in der Wandung der Fluidleitung erzielen.

Im folgenden wird ein Ausführungsbeispiel der Erfindung anhand der Zeichnungen näher beschrieben. Es zeigen:
- Fig. 1: eine perspektivische Darstellung eines Werkzeugs mit den Erfindungsmerkmalen,
- Fig. 2: eine Explosionsdarstellung des Werkzeugs von Fig. 1,
- Fig. 3: eine Draufsicht auf eine Exzenterscheibe des Werkzeugs mit den Erfindungsmerkmalen, und
- Fig. 4: einen Lochstempel des Werkzeugs mit den Erfindungsmerkmalen.

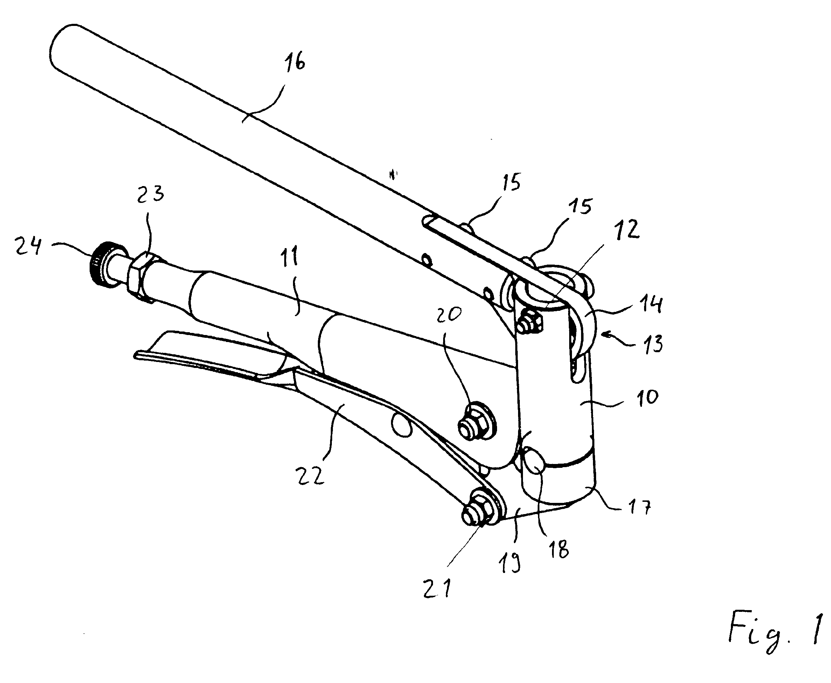

Fig. 1 zeigt ein Werkzeug zum Erzeugen einer Öffnung in der Wandung einer Fluidleitung mit den Erfindungsmerkmalen. Das Werkzeug weist ein Gehäuse 10 auf, das mit einem Hebel 11 starr verbunden ist. Der Hebel 11 kann mit dem Gehäuse 10 beispielsweise verschraubt, vernietet oder auch einstückig mit diesem ausgebildet sein. In einem oberen Bereich des Gehäuses 10 ist schwenkbar um eine Achse 12 eine Exzenterscheibe 13 angeordnet, die eine Nockenbahn 14 aufweist. Die Exzenterscheibe 13 ist an ihrer von dem Gehäuse 10 abgewandten Seite mittels zweier Bolzen 15 mit einem Hebel 16 verbunden.

An dem von der Achse 12 abgewandten Ende des Gehäuses 10 ist diesen zugewandt eine Klemmbacke 17 angeordnet. Das Gehäuse 10 und die Klemmbacke 17 weisen an ihren einander zugewandten Flächen jeweils eine teilzylinderförmige Aussparung auf, die gemeinsam eine Aufnahme 18 zum Aufnehmen einer Fluidleitung bilden.

Am von der Aufnahme 18 abgewandten Ende ist die Klemmbacke 17 starr mit einem Gelenkhebel 19 verbunden. Die starre Verbindung kann beispielsweise mittels Verschrauben, Verlöten oder Verschweißen oder auch mittels einer einstückigen Ausführung gewährleistet sein. Der Gelenkhebel 19 ist mittels einer ersten Achse 20 schwenkbar an dem Hebel 11 und mittels einer zweiten Achse 21 ebenfalls schwenkbar an einem Griffstück 22 angeordnet. Das Griffstück 22 ist wiederum mittels eines nicht in der Fig. dargestellten Hebels mit einer Rändelschraube 24 verbunden, die in eine Mutter 23 am von dem Gehäuse 10 abgewandten Ende des Hebels 11 geschraubt ist. Auf diese Weise kann mittels Einschrauben der Rändelschraube 24 in die Mutter 23 ein Verstellen des Anstellwinkels des Gelenkhebels 19 in einem Zustand, bei den das Griffstück 22 an den Hebel 11 anliegt nach Art einer sogenannten Gripzange, bewirkt werden.

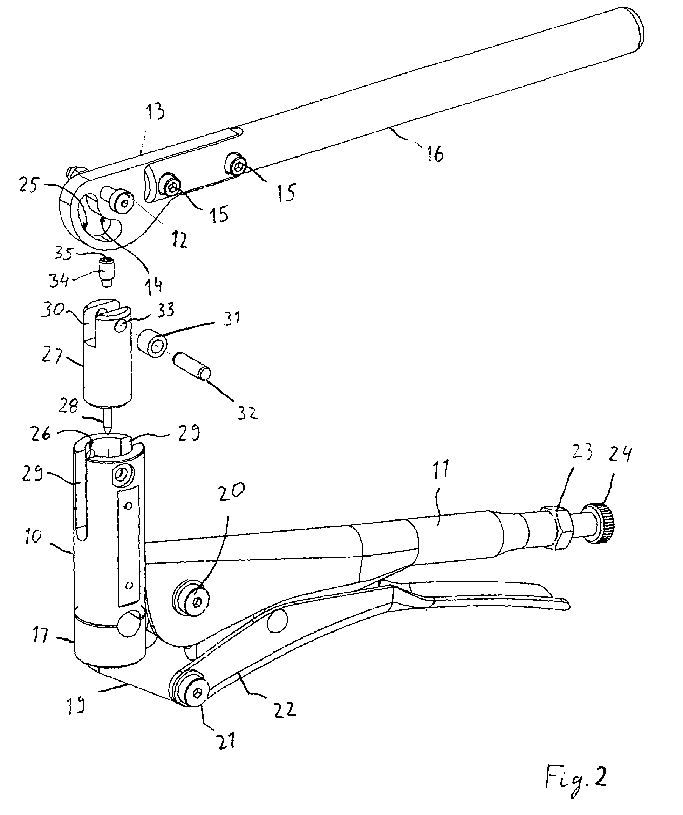

Fig. 2 zeigt eine Explosionsdarstellung des Werkzeugs von Fig. 1. Gleiche Elemente tragen die gleichen Bezugsziffern. Wie sich der Fig. entnehmen läßt, weist die Exzenterscheibe 13 eine zu der Nockenbahn 14 konzentrische Aussparung 25 auf. In einer zylindrischen Bohrung 26 des Gehäuses 10 ist darüber hinaus eine Führung 27 für einen Lochstempel 28 angeordnet. Das Gehäuse 10 weist darüber hinaus zwei Schlitze 29 für die Exzenterscheibe 13 auf.

Der Lochstempel 28 ist in einer Bohrung der Führung 27 angeordnet. Die Führung 27 hat eine in etwa zylinderförmige Gestalt und weist an ihrem der Exzenterscheibe 13 zugewandten Seite eine dieser zugeordnete Schlitzung 30 auf. Im montierten Zustand ist die Exzenterscheibe 13 im Bereich der Schlitzung 30 angeordnet, wobei eine Rolle 31 in der Aussparung 25 angeordnet und mittels eines Bolzens 32 in einer Bohrung 33 der Führung 27 fixiert ist. Eine Schraube 34 dient zum Befestigen des Lochstempels 28 an der Führung 27. Die Schraube 34 weist an ihrer der Rolle 31 zugewandten Seite einen Innensechskant 35 auf.

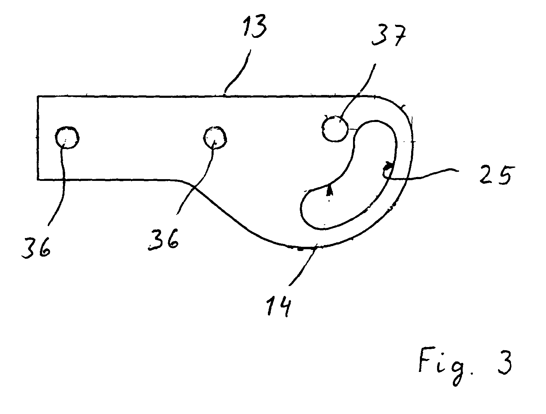

Fig. 3 zeigt die Exzenterscheibe 13 in einer vergrößerten Darstellung. Die Exzenterscheibe weist zwei den Bolzen 15 zugeordnete Bohrungen 36 sowie eine der Achse 12 zugeordnete Bohrung 37 auf. Wie sich der Fig. entnehmen läßt, sind die Aussparung 25 und die Nockenbahn 14 konzentrisch zueinander und exzentrisch zu der Bohrung 37 angeordnet.

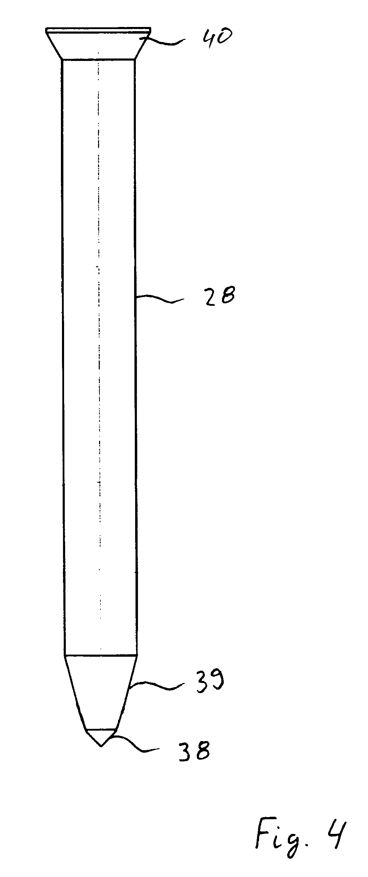

Fig. 4 zeigt den Lochstempel 28 in einer vergrößerten Darstellung. Der Lochstempel 28 weist an seiner Spitze einen ersten Bereich 38 und einen diesem benachbarten zweiten Bereich 39 auf. Wie sich der Fig. entnehmen läßt, ist der erste Bereich 38 verhältnismäßig stumpf, während der zweite Bereich 39 spitzer ist, das heißt einen kleineren Winkel aufweist als der erste Bereich 38. An dem von den Bereichen 38, 39 abgewandten Ende hat der Lochstempel 28 eine Verdickung 40, mittels derer einerseits ein Herausfallen des Lochstempels 28 aus der Führung 27 verhindert wird und die andererseits als Wiederlager für die Nocke 34 dient.

Bei einem Betätigen des in den Fig. 1 bis 4 dargestellten Werkzeuges mit den Erfindungsmerkmalen wird zunächst eine zu bearbeitende Fluidleitung in der Aufnahme 18 plaziert und mittels Herandrücken des Griffstückes 22 an den Hebel 11 dort fixiert. Zum Einstellen der Aufnahme 18 auf den jeweils verwendeten Durchmesser der Fluidleitung läßt sich der Anstellwinkel des Gelenkhebels 19 in einem geschlossenen Zustand des Werkzeuges, in dem das Griffstück 22 an dem Hebel 11 anliegt, mittels Einschrauben der Rändelschraube 24 in die Mutter 23 verstellen. Nachdem die Fluidleitung in der Aufnahme 18 fixiert worden ist, wird der Lochstempel 28 mittels Herunterschwenken des Hebels 16 aus einer zu dem Hebel 11 nahezu rechtwinkligen Position in eine zu dem Hebel 11 nahezu parallele Position in die Wandung der Fluidleitung hineingetrieben. Dabei kommt zunächst der erste Bereich 38 des Lochstempels 28 in Kontakt mit der Wandung und bewirkt dort ein Deformieren derselben in einem verhältnismäßig kleinen Bereich. Wenn dann der erste Bereich 38 die Wandung soweit deformiert beziehungsweise bereits eine kleine Öffnung in diese hineingedrückt hat, daß der zweite Bereich 39 in Kontakt mit der Wandung gelangt, wird hier wegen der kleineren Steigung des zweiten Bereichs 39 bei einem gleichen Hub des Lochstempels 28 nur noch eine geringere Vergrößerung der Öffnung in der Wandung der Fluidleitung bewirkt. Auf diese Weise wird die erforderliche Kraft reduziert. Weiter bewirkt die exzentrische Anordnung der Nockenbahn 14 zu der Achse 12, daß zu Beginn des Erzeugens der Öffnung in der Wandung der Fluidleitung in dem Zustand, in dem der Hebel 16 nahezu rechtwinklig zu dem Hebel 11 angeordnet ist, zwischen dem Auflagepunkt der Nockenbahn 14 und der Achse 12 nur ein verhältnismäßig geringer Hebelarm ausgebildet ist. Dadurch wird eine besonders große Kraft zum Einstechen des ersten Bereiches in die Wandung der Fluidleitung erzeugt. Mit zunehmendem Herunterschwenken des Hebels 16 in eine zu dem Hebel 11 nahezu parallele Position wird der Hebelarm zwischen der jeweiligen Position an der Nockenbahn 14 und der Achse 12 mehr und mehr vergrößert, wobei eine Bedienperson in diesem immer weiter heruntergeschwenkten Zustand eine immer größere Kraft aufwenden kann, so daß in Kombination mit der geringeren Steigung des zweiten Bereiches 39 ein müheloses Eindringen des Lochstempels 28 in die Wandung der Fluidleitung gewährleistet ist. Die Rolle 31 ist im Innern der Aussparung 25 angeordnet und bewirkt beim Öffnen, also dem in die rechtwinklige Position Schwenken des Hebels 16 ein Aufwärtsziehen der Führung 27 aus dem Gehäuse 10. Beim Abwärtsschwenken des Hebels 16 rollt die Rolle 31 auf der Nockenbahn 14 ab und kann so nahezu reibungsfrei die so erzeugte Kraft auf den Lochstempel 28 übertragen.

### Bezugszeichenliste:

- 10: Gehäuse
- 11: Hebel
- 12: Achse
- 13: Exzenterscheibe
- 14: Nockenbahn
- 15: Bolzen
- 16: Hebel
- 17: Klemmbacke
- 18: Aufnahme
- 19: Gelenkhebel
- 20: Achse
- 21: Achse
- 22: Griffstück
- 23: Mutter
- 24: Rändelschraube
- 25: Aussparung
- 26: Bohrung
- 27: Führung
- 28: Lochstempel
- 29: Schlitz
- 30: Schlitzung
- 31: Rolle
- 32: Bolzen
- 33: Bohrung
- 34: Schraube
- 35: Kugel
- 36: Bohrung
- 37: Bohrung
- 38: erster Bereich
- 39: zweiter Bereich
- 40: Verdickung

## Patentansprüche

1. Werkzeug zum Erzeugen einer Öffnung in der Wandung einer Fluidleitung, insbesondere eines Metallrohres für Druckwasser, mit einer Aufnahme (18) für die Fluidleitung, mit einem Lochstempel (28) zum Durchdringen der Wandung, mit einem handbetätigbaren Hebel (16) zum Antreiben des Lochstempels (28), und mit Fixiermitteln (17, 19, 22) zum Fixieren der Fluidleitung in der Aufnahme (18), **dadurch gekennzeichnet, daß** der Lochstempel (28) einen vorderen ersten Bereich (38) mit einem ersten Winkel und einen dem ersten Bereich benachbarten zweiten Bereich (39) mit einem kleineren zweiten Winkel aufweist, so daß nachdem der erste Bereich in die Wandung eingedrungen ist, sich die Öffnung in die Wandung mehr und mehr vergrößert.

2. Werkzeug nach Anspruch 1, **dadurch gekennzeichnet, daß** die Aufnahme (18) in einer an eine Basis klemmbaren Klemmbacke (17) ausgebildet ist.

3. Werkzeug nach Anspruch 2, **gekennzeichnet durch** einen mittels eines Griffstückes (22) betätigbaren Gelenkhebel (19) zum Klemmen der Klemmbacke (17) an die Basis.

4. Werkzeug nach einem der vorhergehenden Ansprüche, **gekennzeichnet durch** Verstellmittel (23, 24) zum Verstellen der Fixierkraft.

5. Werkzeug nach einem der vorhergehenden Ansprüche, **dadurch gekennzeichnet, daß** der Lochstempel (28) mittels eines Getriebes (14, 34) mit dem Hebel (16) gekoppelt ist, insbesondere mittels eines Kurvengetriebes (14, 34).

6. Werkzeug nach Anspruch 5, **dadurch gekennzeichnet, daß** das Kurvengetriebe eine exzentrisch gelagerte Kurvenscheibe (13) mit einer Nockenbahn (14) aufweist, die mit einer Nocke (31) zum Antreiben des Lochstempels (28) zusammenwirkt.

7. Werkzeug nach Anspruch 6, **dadurch gekennzeichnet, daß** die Nocke (34) eine drehbar zum Abrollen auf der Nockenbahn (14) gelagerte Kugel oder Rolle (31), insbesondere aus Keramik oder gehärtetem Stahl, aufweist.

8. Werkzeug nach einem der vorhergehenden Ansprüche, **dadurch gekennzeichnet, daß** der Lochstempel (28) verschiebbar in einem die Aufnahme (18) aufweisenden Gehäuse (10) angeordnet ist.

9. Werkzeug nach einem der vorhergehenden Ansprüche, **gekennzeichnet durch** eine Führung (26, 27) für den Lochstempel (28).

## Claims

1. Tool for producing a hole in the wall of a fluid line, in particular of a metal tube for pressurised water, comprising a receiving part (18) for receiving said fluid line, a hole-cutting punch (28) for penetration through said wall, a manually operable lever (16) for driving said hole-cutting punch (28) and fixing means (17, 19, 22) for fixing said fluid line in said receiving part (18), **characterised in that** said hole-cutting punch (28) presents a front first section (38) having a first angle and a second section (39) adjacent to said first section and having a smaller second angle so that after penetration of said first section into said wall the opening in said wall is gradually widened.

2. Tool according to Claim 1, **characterised in that** said receiving part (18) is formed in a clamping jaw (17) adapted to be clamped to a base.

3. Tool according to Claim 2, **characterised by** an articulated lever (19) operable by means of a handle (22) for clamping said clamping jaw (17) to said base.

4. Tool according to any of the preceding Claims, **characterised by** adjusting means (23, 24) for adjusting the fixing force.

5. Tool according to any of the preceding Claims, **characterised in that** said hole-cutting punch (28) is coupled to said lever (16) by means of a gear means (14, 34), in particular by means of a cam mechanism (14, 34).

6. Tool according to Claim 5, **characterised in that** said cam mechanism comprises an eccentrically supported cam plate (13) having a cam path (14) cooperating with a cam (31) for driving said hole-cutting punch (28).

7. Tool according to Claim 6, **characterised in that** said cam (34) comprises a sphere or roller (31) supported for rotation for rolling along said cam path (14), in particular a sphere or roller made of ceramic material or hardened steel.

8. Tool according to any of the preceding Claims, **characterised in that** said hole-cutting punch (28) is disposed for displacement in a housing (10) comprising said receiving part (18).

9. Tool according to any of the preceding Claims, **characterised by** a guide (26, 27) for said hole-cutting punch (28).

## Revendications

1. Outil à produire une ouverture dans la paroi d'un conduit de fluide, en particulier d'un tube métallique pour le passage de l'eau sous pression, comprenant un logement récepteur (18) à recevoir ledit conduit de fluide, un poinçon (28) à pénétrer en travers ladite paroi, un levier à commande à main (16) à chasser ledit poinçon (28) et des moyens de fixage (17, 19, 22) à fixer ledit conduit de fluide dans ledit logement récepteur (18), **caractérisé en ce que** ledit poinçon (28) présente une première partie avant (38) ayant un premier angle et une deuxième partie (39) adjacente à ladite première partie, qui présente un deuxième angle plus petit, de façon, qu'après la pénétration de ladite première partie dans ladite paroi, l'ouverture dans ladite paroi s'élargisse peu à peu.

2. Outil selon la revendication 1, **caractérisé en ce que** ledit logement récepteur (18) est formé dans une mâchoire de serrage (17) apte à être serrée à une base.

3. Outil selon la revendication 2, **caractérisé par** un levier articulé (19) à commande moyennant une poignée (22) afin de serrer ladite mâchoire de serrage (17) à ladite base.

4. Outil selon une quelconque des revendications précédentes, **caractérisé par** des moyens de réglage (23, 24) à régler la force de fixage.

5. Outil selon une quelconque des revendications précédentes, **caractérisé en ce que** ledit poinçon (28) est accouplé audit levier (16) moyennant un mécanisme à engrenages (14, 34), en particulier moyennant un mécanisme à cames (14, 34).

6. Outil selon la revendication 5, **caractérisé en ce que** ledit mécanisme à cames comprend une came logée de manière excentrique (13), qui présente une voie de came (14) en coopération avec une came (31) à entraîner ledit poinçon (28).

7. Outil selon la revendication 6, **caractérisé en ce que** ladite came (34) comprend une sphère ou un rouleau (31) logé de manière rotative à rouler le long de ladite voie de came (14), en particulier une sphère ou un rouleau fait en un matériau céramique ou en acier trempé.

8. Outil selon une quelconque des revendications précédentes, **caractérisé en ce que** ledit poinçon (28) est disposé pour un déplacement dans un carter (10) comprenant ledit logement récepteur (18).

9. Outil selon une quelconque des revendications précédentes, **caractérisé par** un élément de guidage (26, 27) pour ledit poinçon (28).
